# EUROPEAN PATENT SPECIFICATION

(11) **EP 4 527 600 B1**
(45) Date of publication and mention of the grant of the patent: **20.05.2026**
(21) Application number: 24190288.1
(22) Date of filing: 23.07.2024
(51) Int. Cl.: B29C 70/32, B29C 70/34, B29C 70/44, B29C 65/00, B29C 70/16, B32B 5/12, F17C 1/06, B29C 53/60, F16J 12/00

(54) **UNITARY COMPOSITE STRUCTURE**
EINHEITLICHE VERBUNDSTRUKTUR
STRUCTURE COMPOSITE UNITAIRE

(30) Priority: 22.09.2023 US 202363584694 P; 30.05.2024 US 202418678676
(43) Date of publication of application: 26.03.2025
(73) Proprietor: The Boeing Company, Arlington, VA 22202 (US)
(72) Inventor: Goldberg, James, Arlington, 22202 (US); Winfree, Troy, Arlington, 22202 (US); Johnson, Brice Aaron, Arlington, 22202 (US); Blom-Schieber, Adriana Willempje, Arlington, 22202 (US)
(74) Representative: Witte, Weller & Partner Patentanwälte mbB

(56) References cited:
- US-A1- 2007 205 201
- US-B2- 8 752 293

## Description

### BACKGROUND INFORMATION

### 1. Field:

The present disclosure relates generally to composites manufacturing and more specifically to the formation of a composite structure comprising a dome portion and a cylindrical portion.

### 2. Background:

Reducing weight is a concern for the storage, manufacture, or transport of different structures. For example, it is desirable to reduce the weight of aircraft components such as fuel tanks. To reduce weight of components, such as pressure tanks, it can be desirable to manufacture components from composite materials.

Composite materials are strong, light-weight materials created by combining two or more functional components. For example, a composite material may include reinforcing fibers bound in polymer resin matrix. The fibers can take the form of a unidirectional tape, woven cloth or fabric, or a braid. The mechanical properties and other material properties of composite materials can be desirable for some implementations. For example, buoyancy of composite materials can be more desirable for submersible applications.

Document US 2007/205201 A1, according to its abstract, states that a pressure vessel and method for producing a pressure vessel is disclosed. The pressure vessel comprises a liner shell fabricated from composite material applied to a soluble mandrel having a body shaped to pattern an interior of the pressure vessel, the liner shell having an opening, a boss having an aperture therethrough, the boss sealingly bonded to the liner shell with the aperture adjacent the opening, and an outer shell fabricated from plies of composite material filament impregnated with matrix material wound over the liner shell and the boss, but not over the aperture.

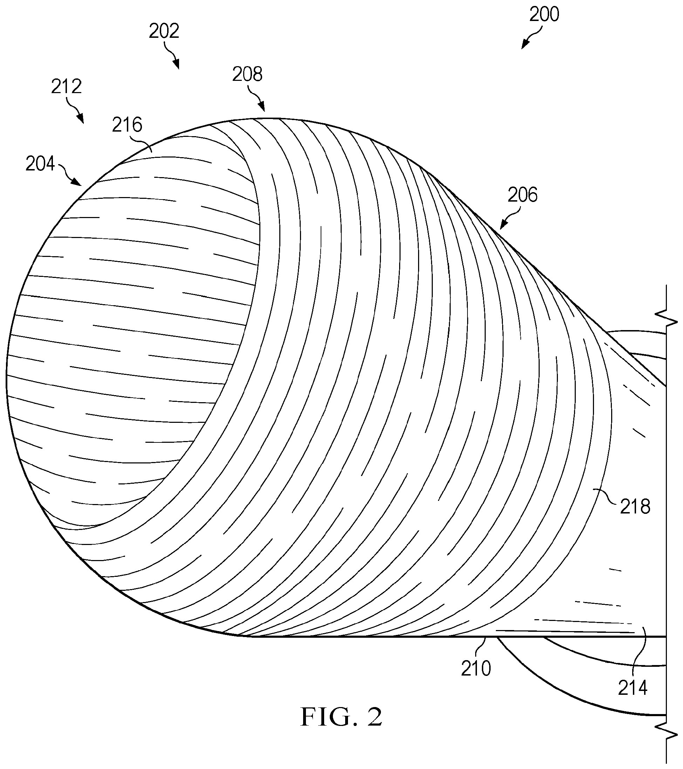

Paragraphs [0063-0066] of US 2007/205201 A1 state:
"[0063] The liner shell 16 is fabricated by hand layup or wrapping of composite material over two male layup tool halves, one of which is shown at 22 in FIG. 2. Alternatively, a single layup tool (not shown) could be used to form the whole liner shell 16 as one piece. However, because the method of the invention as presently contemplated requires that the bosses 20 be installed from the inside of the liner shell 16, the shell formed over a single layup tool would need to be cut in half after layup and curing. Each tool half 22 includes a cylindrical body 24 and an integral dome 26, with a metallic end fitting 28 connected to the dome. The metallic end fitting 28 includes a projecting stud 30 and an annular flange 32 that conforms with the inner surface of the dome 26. The same tool 22 may be used in the fabrication of tanks of various sizes, by terminating layup at a selected point on the cylindrical body 24, as indicated by broken lines 34. Tool removal is further facilitated by the application of wax or another mold release coating on the tool surface before layup begins.

### (2) Liner Shell Layup Process:

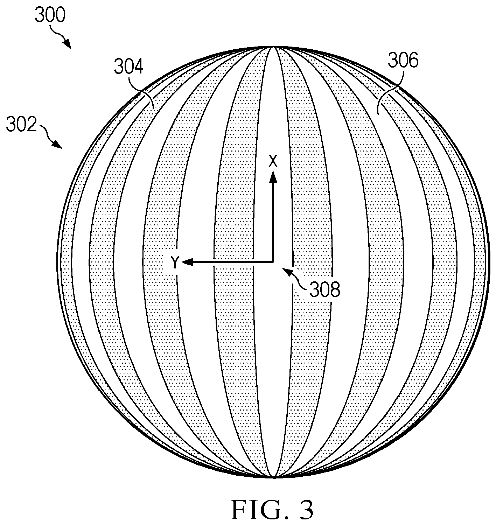

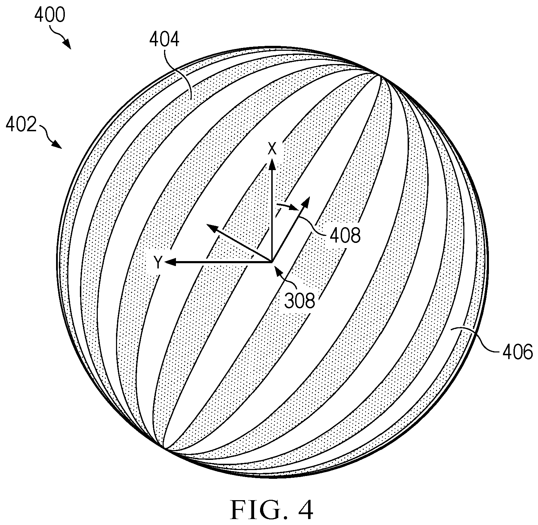

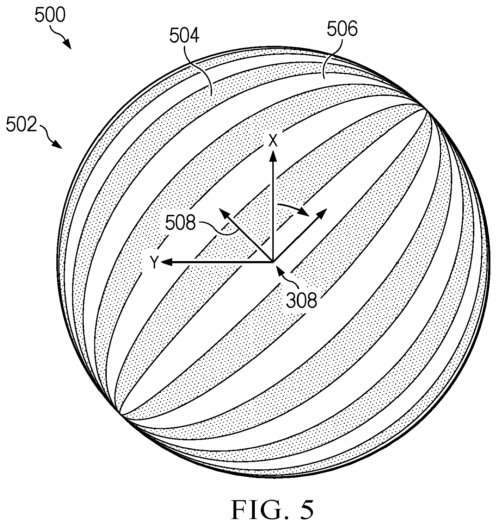

Although the hand layup process is described here, it will be understood that a machine wrapping process may be used with equivalent results. As shown in FIG. 3, each layer or ply of material is laid on the tool in accordance with a specific layup schedule. Because of the surface curvature of the liner shell 16, fabric for fabricating the liner shell was cut using three different patterns. "Doily" pattern 40 was used around the boss end fitting 20. "Field" pattern 42 was used around the dome and the dome-cylinder interface. "Cylinder" pattern 44 was used around the cylinder. All of the patterns are cut from flat fabric, such as selected fiberglass or graphite fabric. Doily pattern 40 is annular in shape, with a central hole to permit placement over the stud 30 of the metallic end fitting 28. Cylinder pattern 44 is rectangular in shape and is used only on the cylindrical body 24 of the tool 22. Field pattern 42 is of irregular shape, as further described below, and is used in the dome portion 26 of the tool 22. In the illustrated layup process, each layer is made up of eight adjoining cylindrical pattern sections encircling the cylindrical body 24 of the tool 22, and a tier of eight field pattern sections adjoining the cylindrical sections. The layer also includes a single doily pattern section butted against the edges of the eight field sections. FIG. 4 is an end view of the laid-up liner shell 16, showing a doily pattern section 40 and eight field pattern sections 42. FIG. 5 is a cross-sectional view of a portion of the laid-up liner shell 16, showing the metal end fitting 28 and showing that there are eight layers in all.

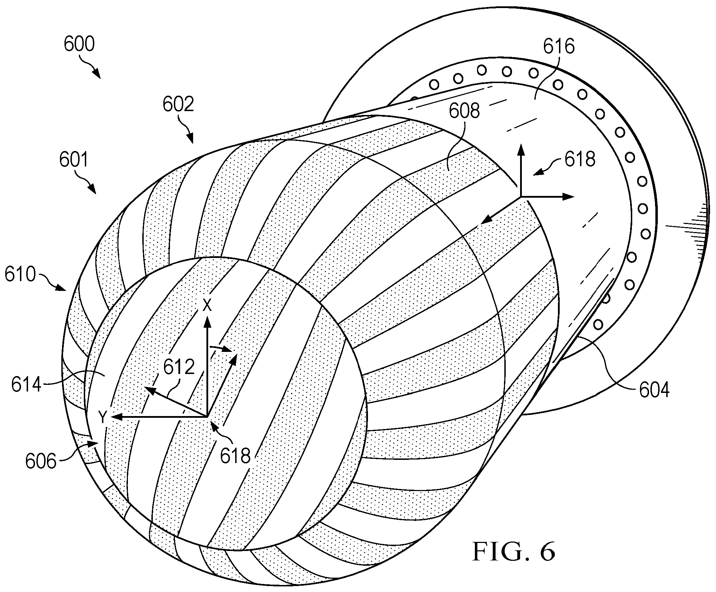

FIG. 6 is a plan view of a template for a field pattern section 42. The field pattern template is symmetrical about a longitudinal axis 's' and has a halfwidth 'w' that is predefined for each ordinate in the s-axis direction. The field pattern template includes a lower section 50 with parallel side edges and a length sp measured in the s-axis direction, and an upper section 52 with convexly curved side edges and a length sc measured in the s-axis direction. The lower sections 50 abut over the cylindrical section 24 of the took 22 and form the upper cylindrical section 24 of the liner shell. The upper sections 52 abut over the dome portion 26 of the tool 22. The lower portion 52 of the pattern includes a concave arcuate edge of radius rc selected to form a circular edge with adjacent field pattern sections 42. The specific width, length and radius measurements of each field pattern section are selected to provide abutting sections when laid up on the tool 22. The ply fiber direction in the eight plies 42 is alternated between 0'' and 45'' with respect to the s axis, for successive pairs of layers. That is, the fiber angle is 0[deg.] for plies #1 and #2, 45[deg.] for plies #3 and #4, 0[deg.] for plies #5 and #6, and 45[deg.] for plies #7 and #8.

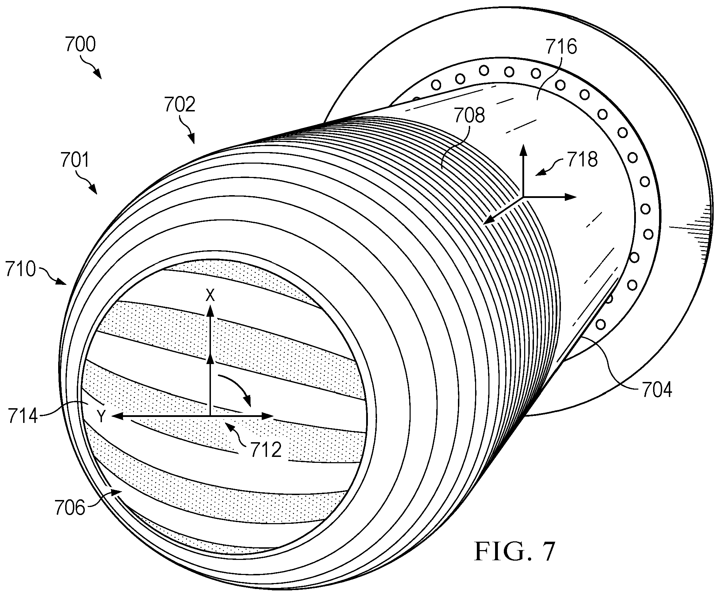

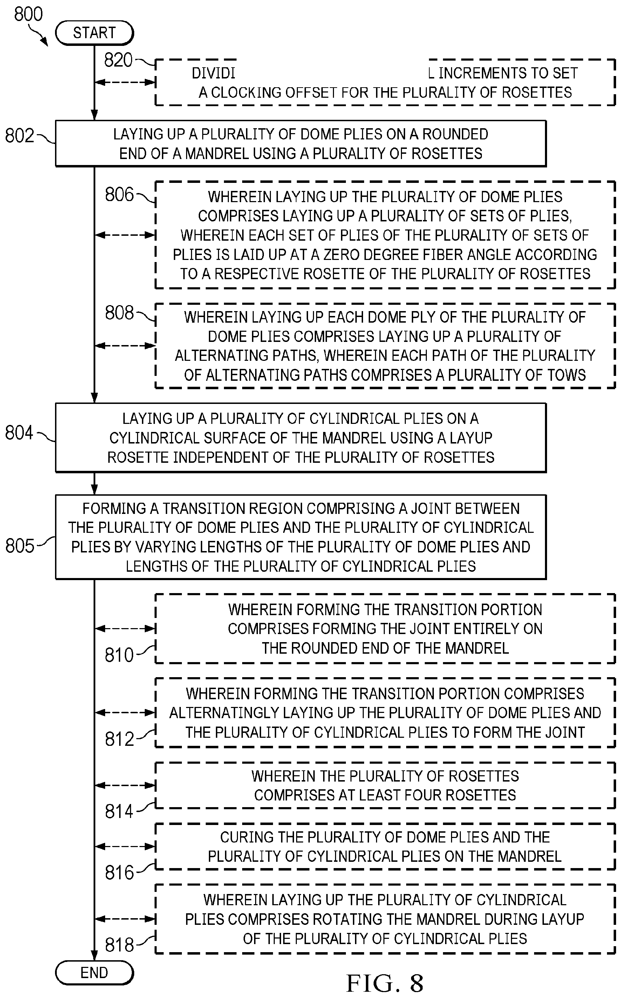

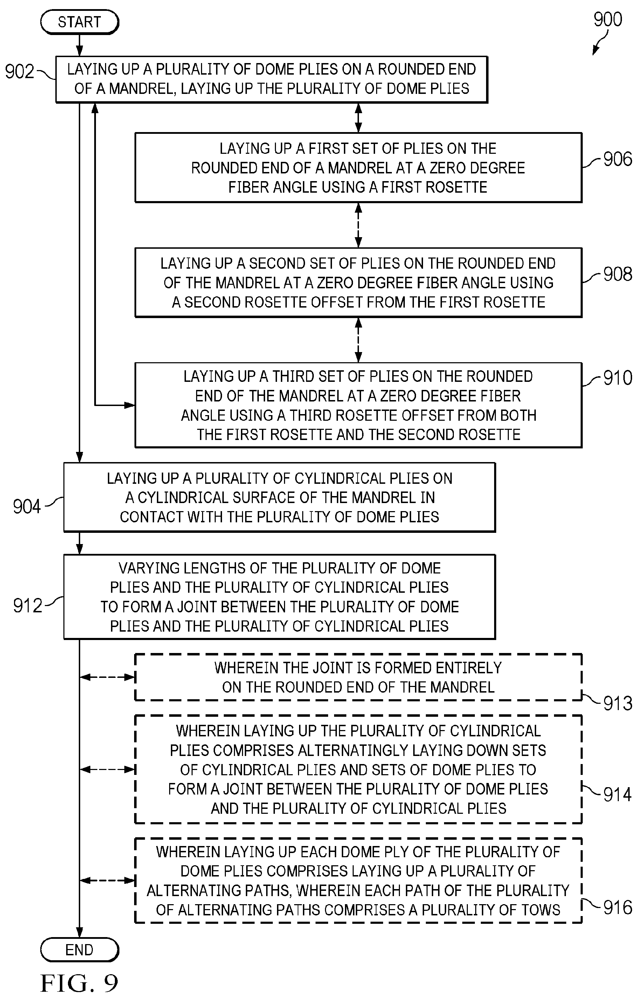

FIG. 7 is a plan view of a template for a doily pattern 40, the shape of which is annular, having an outer radius ro and an inner radius ri, which are defined in accordance with a lay-up schedule for a specific tank size. FIG. 8 depicts how multiple layers of doily sections 40, field sections 42 and cylinder sections 44 are laid up on the tool 22. The lay-up sequence includes the steps of: (1) laying up the doily section 40, (2) laying up eight field section segments 42 butted to the doily section and butted to each other, with the last segment trimmed to fit, (3) laying up eight cylinder section segments 44 butted to the field section segments and to each other, with the last segment trimmed to fit, and (4) repeating the foregoing steps to apply a total of eight layers. The section segments are precisely dimensioned to provide section joints that are both stepped and staggered, as best shown in FIG. 9, which depicts the joints between eight layers of doily sections 40 and eight layers of field sections 42. Butt-jointed edges of plies in the first and other odd-numbered layers are offset or staggered with respect to the edges of plies in the second and other even-numbered layers. In addition, the butt joints of the odd-numbered layers are stepped with respect to each other, i.e., they are positioned at successively spaced positions. As a result, a butt joint on any one layer completely covered by at least one ply above or the joint. Butt joints in middle layers, i.e., not the first and last layers, are completely covered by plies both above and below the joint."

Therefore, it would be desirable to have a method and apparatus that takes into account at least some of the issues discussed above, as well as other possible issues.

### SUMMARY

According to the present disclosure, a method and a unitary composite structure as defined in the independent claims are provided. Further embodiments are defined in the dependent claims. Although the scope is only defined by the claims, the below embodiments, examples, and aspects are present for aiding in understanding the background and advantages.

An embodiment of the present disclosure provides a method of laying up a unitary composite structure. A plurality of dome plies are laid up on a rounded end of a mandrel using a plurality of rosettes. A plurality of cylindrical plies are laid up on a cylindrical surface of the mandrel using a layup rosette independent of the plurality of rosettes. A transition region is formed, the transition region comprising a joint between the plurality of dome plies and the plurality of cylindrical plies by varying lengths of the plurality of dome plies and lengths of the plurality of cylindrical plies, wherein forming the transition region comprises forming the joint entirely on the rounded end of the mandrel.

Another embodiment of the present disclosure provides a unitary composite structure. The unitary composite structure comprises a dome portion comprising a plurality of sets of plies laid up using a plurality of rosettes; a cylindrical portion laid up with a layup rosette independent of the plurality of rosettes; and a transition region comprising a joint between the dome portion and the cylindrical portion formed by varying lengths of plurality of dome plies of the dome portion and varying lengths of plurality of cylindrical plies of the cylindrical portion, wherein the joint is formed entirely on the rounded end of a mandrel.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of a manufacturing environment in accordance with an illustrative embodiment;
**Figure 2** is an illustration of an isometric view of a unitary composite structure on a mandrel in accordance with an illustrative embodiment;
**Figure 3** is an illustration of a front view of a ply of a dome portion of a composite structure in accordance with an illustrative embodiment;
**Figure 4** is an illustration of a front view of a ply of a dome portion of a composite structure in accordance with an illustrative embodiment;
**Figure 5** is an illustration of a front view of a ply of a dome portion of a composite structure in accordance with an illustrative embodiment;
**Figure 6** is an illustration of an isometric view of composite plies laid up on a mandrel in accordance with an illustrative embodiment;
**Figure 7** is an illustration of an isometric view of composite plies laid up on a mandrel in accordance with an illustrative embodiment;
**Figure 8** is a flowchart of a method of laying up a unitary composite structure in accordance with an illustrative embodiment;
**Figure 9** is a flowchart of a method of laying up a composite structure in accordance with an illustrative embodiment;
**Figure 10** is an illustration of an aircraft manufacturing and service method in a form of a block diagram in accordance with an illustrative embodiment; and
**Figure 11** is an illustration of an aircraft in a form of a block diagram in which an illustrative embodiment may be implemented.

### DETAILED DESCRIPTION

The illustrative examples take into account one or more considerations. The illustrative examples take into account that current dome fabrication uses a standard rosette orientation methodology and domes and cylinders are fabricated separately. The illustrative examples recognize and take into account that large domes allow for steering of the cylinder (standard orientation) plies onto a dome region. The illustrative examples recognize and take into account that a steering radius using the standard rosette orientation methodology on smaller dome structures becomes small enough to produce undesirable effects in the domes. The illustrative examples also recognize and take into account that conventional fiber placement paths that transition onto the dome surface have a singularity at the poles of the dome resulting in unacceptable results. The illustrative examples provide methods of forming and a unitary composite structure that can be formed with smaller dome diameters without undesirable effects. The illustrative examples provide methods and a unitary composite structure formed without singularities at the poles. The illustrative examples provide methods of forming a unitary composite structure having a half capsule shape.

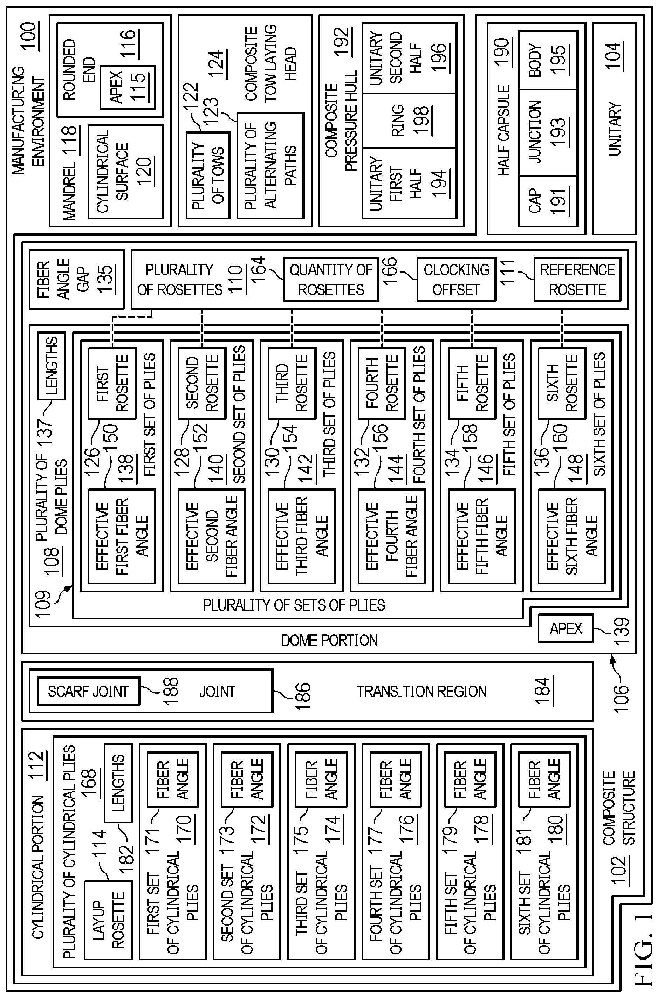

Turning now to **Figure 1****,** an illustration of a block diagram of a manufacturing environment is depicted in accordance with an illustrative embodiment. Unitary **104** composite structure **102** is manufactured in manufacturing environment **100.** Unitary **104** composite structure **102** comprises dome portion **106** comprising plurality of sets of plies **109** laid up using plurality of rosettes **110,** and cylindrical portion **112** laid up with layup rosette **114** independent of plurality of rosettes **110.** In some illustrative examples, the layup rosette **114** is projected onto surface such that the y-axis extends longitudinally along mandrel **118** and x-axis extends in a circumferential direction.

Layup rosette **114** for cylindrical portion **112** comprises an axis in a reference coordinate system. In some illustrative examples, an X-axis can be used for the zero reference. Any axis of layup rosette **114** can be used for the zero reference. The axis can be anywhere in space. In some illustrative examples, the axis is the axis of symmetry for mandrel **118.**

In some illustrative examples, the reference axis is projected onto cylindrical surface **120** at a point, to define the 0 direction on cylindrical surface **120.** The fiber angle is then rotated about that local point from the 0 projection, about a surface normal, to determine the path direction at that point.

Unitary **104** composite structure **102** is laid up on mandrel **118.** Mandrel **118** comprises rounded end **116** and cylindrical surface **120.** Dome portion **106** is laid up on rounded end **116** of mandrel **118.** Cylindrical portion **112** is laid up on cylindrical surface **120.**

Dome portion **106** comprises plurality of dome plies **108** laid up on rounded end **116** of mandrel **118.** Plurality of dome plies **108** are laid up entirely on rounded end **116** of mandrel **118.** Cylindrical portion **112** comprises plurality of cylindrical plies **168** laid up on cylindrical surface **120.** At least one cylindrical ply of plurality of cylindrical plies **168** extends onto rounded end **116** of mandrel **118.** Portions of plurality of cylindrical plies **168** that extend onto rounded end **116** form transition region **184.**

In some illustrative examples, a cylindrical ply of plurality of cylindrical plies **168** is a composite ply that is generally started on cylindrical surface **120** and transitions to a portion of rounded end **116** of mandrel **118.** In some illustrative examples, many of plurality of cylindrical plies **168** will continue onto rounded end **116** of mandrel **118.** In some illustrative examples, all of plurality of cylindrical plies **168** will continue onto rounded end **116** of mandrel **118.** Material characteristics of plurality of dome plies **108** may be undesirable at the edge of rounded end **116** where rounded end **116** meets cylindrical surface **120.** Accordingly, plurality of dome plies **108** can be laid up on rounded end **116** and terminate prior to an intersection with cylindrical surface **120.**

In some illustrative examples, each rosette of plurality of rosettes **110** has a Z-axis extending into apex **115** of rounded end **116** of mandrel **118.** In some illustrative examples, each rosette of plurality of rosettes **110** has a Z-axis extending parallel to cylindrical surface **120** of mandrel **118.** In some illustrative examples, each rosette of plurality of rosettes **110** has a Z-axis that is perpendicular to plurality of dome plies **108** over apex **115** of rounded end **116** of mandrel **118.**

Plurality of rosettes **110** comprises rosettes rotated about the z-axis extending into or away from apex **115.** In some illustrative examples, the rotating about the Z-axis can be referred to as "clocking". In some illustrative examples, plurality of rosettes **110** comprises reference rosette **111** and a number of rosettes clocked about the Z-axis relative to the reference rosette. In some illustrative examples, the reference rosette is positioned to layup zero degree fiber angle plies in composite structure **102.**

In some illustrative examples, reference rosette **111** is oriented such that a Z-axis is normal to apex **115** of rounded end **116** of mandrel **118.** In some illustrative examples, reference rosette **111** is oriented such that a Z-axis is parallel to a longitudinal axis of cylindrical surface **120** of mandrel **118.** The x-axis and y-axis of reference rosette **111** can have any desirable directions. In some illustrative examples, reference rosette **111** is oriented such that one axis is parallel to a Z-axis of layup rosette **114.** In some illustrative examples, the reference rosette has a Y-axis perpendicular to a manufacturing floor. In some illustrative examples, the reference rosette had an X-axis parallel to the manufacturing floor.

A rosette is an orientation for laying up plurality of tows **122** by composite tow laying head **124.** Prior to laying plurality of tows **122** on mandrel **118,** composite tow laying head **124** positions itself relative to mandrel **118** using a respective rosette of plurality of rosettes **110.**

Plurality of rosettes **110** can comprise any desirable quantity of rosettes **164.** In some illustrative examples, plurality of rosettes **110** comprises at least four rosettes. As depicted, plurality of rosettes **110** comprises six rosettes, first rosette **126,** second rosette **128,** third rosette **130,** fourth rosette **132,** fifth rosette **134,** and sixth rosette **136.** In some illustrative examples, plurality of rosettes **110** comprises more than six rosettes. In some illustrative examples, dome portion **106** comprises a quantity of fiber angles equal to a quantity of rosettes **164** in plurality of rosettes **110.**

In some illustrative examples, a separation between each of plurality of rosettes **110** is determined by dividing one hundred and eighty degrees into equal increments to set clocking offset **166** for plurality of rosettes **110.** In one illustrative example, when quantity of rosettes **164** comprises four rosettes, clocking offset **166** is 180/4 or 45 degrees. In this illustrative example, plurality of rosettes **110** comprises 0 degrees, 45 degrees, 90 degrees, and 135 degrees. In one illustrative example, when quantity of rosettes **164** is six rosettes, clocking offset **166** is 180/6 or 30 degrees. In this illustrative example, plurality of rosettes **110** comprises 0 degrees, 30 degrees, 60 degrees, 90 degrees, 120 degrees, and 150 degrees. In another illustrative example, when quantity of rosettes **164** is eight rosettes, clocking offset **166** is 180/8 or 22.5 degrees. In this illustrative example, plurality of rosettes **110** comprises 0 degrees, 22.5 degrees, 45 degrees, 67.5 degrees, 90 degrees, 112.5 degrees, 135 degrees, and 157.5 degrees.

Dome portion **106** comprises plurality of dome plies **108.** Plurality of dome plies comprises plurality of sets of plies **109.**

Plurality of sets of plies **109** comprises first set of plies **138,** second set of plies **140,** third set of plies **142,** fourth set of plies **144,** fifth set of plies **146,** and sixth set of plies **148.** Although the terms "first", "second", "third", "fourth", "fifth", and "sixth" are used, these terms do not indicate an order or sequence. Each of first set of plies **138,** second set of plies **140,** third set of plies **142,** fourth set of plies **144,** fifth set of plies **146,** and sixth set of plies **148** can be laid up in any desirable order. Additionally, each of first set of plies **138,** second set of plies **140,** third set of plies **142,** fourth set of plies **144,** fifth set of plies **146,** and sixth set of plies **148** can have any desirable quantity of plies per set. Although plurality of dome plies **108** is illustrated as comprising first set of plies **138,** second set of plies **140,** third set of plies **142,** fourth set of plies **144,** fifth set of plies **146,** and sixth set of plies **148,** any desirable quantity of sets of plies can be included in plurality of dome plies **108.**

In some illustrative examples, each dome ply of plurality of dome plies **108** comprises plurality of alternating paths **123** of plurality of tows **122.** Each path of plurality of alternating paths **123** comprises plurality of tows **122.** In some illustrative examples, plurality of tows **122** comprises sixteen tows. Plurality of tows **122** comprises any desirable quantity of tows.

Each respective set of dome plies is laid up using a respective rosette of plurality of rosettes **110.** First set of plies **138** is laid up using first rosette **126.** First set of plies **138** is laid up at a zero degree fiber angle relative to first rosette **126.** First rosette **126** is any desirable rosette of plurality of rosettes **110.** By laying up first set of plies **138** according to first rosette **126,** first set of plies **138** has effective first fiber angle **150.** First set of plies **138** has effective first fiber angle **150** relative to reference rosette **111.** In some illustrative examples, first rosette **126** is the same as reference rosette **111.** In some illustrative examples, when first rosette **126** is the same as reference rosette **111,** effective first fiber angle **150** is zero degrees. In some illustrative examples, when first rosette **126** is a rosette other than reference rosette **111,** effective first fiber angle **150** is an angle other than zero degrees.

Second set of plies **140** is laid up using second rosette **128.** Second set of plies **140** is laid up at zero degrees relative to second rosette **128.** By laying up second set of plies **140** according to second rosette **128,** second set of plies **140** has effective second fiber angle **152.** In some illustrative examples, second rosette **128** is clocked relative to reference rosette **111.** When second rosette **128** is clocked relative to reference rosette **111,** effective second fiber angle **152** is a non-zero fiber angle relative to reference rosette **111.** As depicted, quantity of rosettes **164** is six, and effective second fiber angle **152** can be one of 30 degrees, 60 degrees, 90 degrees, 120 degrees, or 150 degrees. In some illustrative examples, effective second fiber angle **152** is 30 degrees.

Third set of plies **142** is laid up using third rosette **130.** Third set of plies **142** is laid up at zero degrees relative to third rosette **130.** By laying up third set of plies **142** according to third rosette **130,** third set of plies **142** has effective third fiber angle **154.** In some illustrative examples, third rosette **130** is clocked relative to reference rosette **111.** When third rosette **130** is clocked relative to reference rosette **111,** effective third fiber angle **154** is a non-zero fiber angle relative to reference rosette **111.** As depicted, quantity of rosettes **164** is six, and effective third fiber angle **154** can be one of 30 degrees, 60 degrees, 90 degrees, 120 degrees, or 150 degrees. In some illustrative examples, effective third fiber angle **154** is 60 degrees. In some illustrative examples, fiber angles of dome portion **106** are approximately equally offset from each other.

Fourth set of plies **144** is laid up using fourth rosette **132.** Fourth set of plies **144** is laid up at zero degrees relative to fourth rosette **132.** By laying up fourth set of plies **144** according to fourth rosette **132,** fourth set of plies **144** has effective fourth fiber angle **156.** In some illustrative examples, fourth rosette **132** is clocked relative to reference rosette **111.** When fourth rosette **132** is clocked relative to reference rosette **111,** effective fourth fiber angle **156** is a non-zero fiber angle relative to reference rosette **111.** As depicted, quantity of rosettes **164** is six, and effective fourth fiber angle **156** can be one of 30 degrees, 60 degrees, 90 degrees, 120 degrees, or 150 degrees. In some illustrative examples, effective fourth fiber angle **156** is 90 degrees.

Fifth set of plies **146** is laid up using fifth rosette **134.** Fifth set of plies **146** is laid up at zero degrees relative to fifth rosette **134.** By laying up fifth set of plies **146** according to fifth rosette **134,** fifth set of plies **146** has effective fifth fiber angle **158.** In some illustrative examples, fifth rosette **134** is clocked relative to reference rosette **111.** When fifth rosette **134** is clocked relative to reference rosette **111,** effective fifth fiber angle **158** is a non-zero fiber angle relative to reference rosette **111.** As depicted, quantity of rosettes **164** is six, and effective fifth fiber angle **158** can be one of 30 degrees, 60 degrees, 90 degrees, 120 degrees, or 150 degrees. In some illustrative examples, effective fifth fiber angle **158** is 120 degrees.

Sixth set of plies **148** is laid up using sixth rosette **136.** Sixth set of plies **148** is laid up at zero degrees relative to sixth rosette **136.** By laying up sixth set of plies **148** according to sixth rosette **136,** sixth set of plies **148** has effective sixth fiber angle **160.** In some illustrative examples, sixth rosette **136** is clocked relative to reference rosette **111.** When sixth rosette **136** is clocked relative to reference rosette **111,** effective sixth fiber angle **160** is a non-zero fiber angle relative to reference rosette **111.** As depicted, quantity of rosettes **164** is six, and effective sixth fiber angle **160** can be one of 30 degrees, 60 degrees, 90 degrees, 120 degrees, or 150 degrees. In some illustrative examples, effective sixth fiber angle **160** is 150 degrees.

Each of effective first fiber angle **150,** effective second fiber angle **152,** effective third fiber angle **154,** effective fourth fiber angle **156,** effective fifth fiber angle **158,** and effective sixth fiber angle **160** is laid down using respective rosettes. Due to using the respective rosettes, steering is at least one of reduced or eliminated in laying down dome portion **106.** Each of effective first fiber angle **150,** effective second fiber angle **152,** effective third fiber angle **154,** effective fourth fiber angle **156,** effective fifth fiber angle **158,** and effective sixth fiber angle **160** is laid down without steering the fibers. Steering in dome portion **106** can result in one edge of the tow being shorter or longer than the other edge of a tow. By reducing or eliminating steering, inconsistencies such as wrinkling, puckering, or fiber lifting are also reduced or eliminated in dome portion **106.**

In some illustrative examples, plurality of dome plies **108** is laid up so that a substantially equal quantity of plies is laid up with each effective fiber angle. In some illustrative examples, plurality of dome plies **108** is laid up so that a substantially equal quantity of plies is laid up with each rosette of plurality of rosettes **110.**

Cylindrical portion **112** is laid up with layup rosette **114.** Layup rosette **114** is independent of plurality of rosettes **110.** Each of plurality of cylindrical plies **168** of cylindrical portion **112** is laid up using layup rosette **114.** Fiber steering can be performed to lay up a plurality of different fiber angles for cylindrical portion **112** with layup rosette **114.** In some illustrative examples, fiber steering occurs in laying up sections of cylindrical portion **112** with non-zero ply angles that extend onto rounded end **116** of mandrel **118.**

First set of cylindrical plies **170** is laid up according to layup rosette **114** to have fiber angle **171.** Fiber angle **171** can have any desirable fiber angle for a design of composite structure **102.** In some illustrative examples, fiber angle **171** is selected from zero degrees, 45 degrees, and 90 degrees.

Second set of cylindrical plies **172** is laid up according to layup rosette **114** to have fiber angle **173.** Fiber angle **173** can be any desirable fiber angle for a design of composite structure **102.** In some illustrative examples, fiber angle **173** can be the same as fiber angle **171.** In some illustrative examples, fiber angle **173** is different from fiber angle **171.**

Third set of cylindrical plies **174** is laid up according to layup rosette **114** with fiber angle **175.** Fourth set of cylindrical plies **176** is laid up according to layup rosette **114** with fiber angle **177.** Fifth set of cylindrical plies **178** is laid up according to layup rosette **114** with fiber angle **179.** Sixth set of cylindrical plies **180** is laid up according to layup rosette **114** with fiber angle **181.**

In some illustrative examples, plurality of cylindrical plies **168** is laid up such that each cylindrical ply overlaps a prior dome ply. In some illustrative examples, first set of cylindrical plies **170** is laid up to cover edges of first set of plies **138.**

Unitary **104** composite structure **102** further comprises transition region **184** between dome portion **106** and cylindrical portion **112** formed by varying lengths **137** of plurality of dome plies **108** of dome portion **106** and varying lengths **182** of plurality of cylindrical plies **168** of cylindrical portion **112.** In some illustrative examples, varying lengths **137** of plurality of dome plies **108** of dome portion **106** and varying lengths **182** of plurality of cylindrical plies **168** of cylindrical portion **112** forms joint **186** within transition region **184.** In some illustrative examples, transition region **184** comprises joint **186.** In some illustrative examples, joint **186** takes the form of scarf joint **188.**

Transition region **184** is laid up on rounded end **116** of mandrel **118.** Transition region **184** can be located in any desirable portion on rounded end **116.**

Dome portion **106** of unitary **104** composite structure **102** does not have a center hole at apex **139** of dome portion **106.** In some illustrative examples, for a location system with an X-axis (0 degrees) extending through apex **139** and parallel to body **195** and a Y-axis (90 degrees) extending through junction **193,** transition region **184** can be positioned in the range of 45 degrees to 75 degrees. In some illustrative example, transition region **184** is positioned in the range of 60 degrees to 75 degrees. In some illustrative examples, transition region **184** is positioned to control fiber angle gap **135.** In some illustrative examples, transition region **184** is positioned to maintain fiber angle gap **135** at or below 45 degrees.

In some illustrative examples, transition region **184** comprises a double scarf joint formed by alternatingly laid sets of cylindrical plies and sets of dome plies. In some illustrative examples, transition region **184** comprises a double scarf joint formed by alternatingly laying sets of dome plies such as first set of plies **138,** second set of plies **140,** or other desirable sets of plurality of dome plies **108** and sets of cylindrical plies such as first set of cylindrical plies **170,** second set of cylindrical plies **172,** or other desirable sets of plurality of cylindrical plies **168.**

In some illustrative examples, joint **186** is formed by a series of abutting plies of plurality of dome plies **108** and plies of plurality of cylindrical plies **168.** In some illustrative examples, joint **186** comprises slightly gapping plies of plurality of dome plies **108** and plies of plurality of cylindrical plies **168.**

In some illustrative examples, transition region **184** has a series of joints between plies at the same thickness. In these illustrative examples, transition region **184** includes at least one additional joint in addition to joint **186.** In some illustrative examples, transition region **184** comprises a set of joints, including joint **186,** that are staggered through the thickness of unitary **104** composite structure **102** and separated to minimize repetition at any location within transition region **184.**

After laying up cylindrical portion **112,** dome portion **106,** and transition region **184** formed by dome portion **106** and cylindrical portion **112,** composite structure **102** is cured. Dome portion **106** and cylindrical portion **112** are co-cured. In some illustrative examples, composite structure **102** can be described as having a shape of half capsule **190.**

Half capsule **190** comprises body **195** and cap **191** with junction **193** between body **195** and cap **191.** In some illustrative examples, junction **193** is a location in which the curvature changes. In some illustrative examples, body **195** is formed entirely by cylindrical portion **112.** In some illustrative examples, cap **191** includes transition region **184.** In some illustrative examples, cap **191** comprises dome portion **106,** transition region **184,** and a fraction of cylindrical portion **112.**

Composite structure **102** can be a portion of composite pressure hull **192.** In some illustrative examples, composite structure **102** can take the form of one of unitary first half **194** or unitary second half **196** of composite pressure hull **192.** Composite pressure hull **192** comprises unitary first half **194** and unitary second half **196** joined by ring **198.**

Fiber angle gap **135** is a measurement of how spread apart fibers are on a location. Fiber angle gap **135** has a maximum of nearly 180 degrees. Fiber angle gap **135** is a measurement of fiber angles through the thickness. In some illustrative examples, fiber angle gap **135** is a largest angle between fiber angles at any location on the surface. Undesirably large fiber angle gaps undesirably affect a strength of composite structure **102.** In some illustrative examples, it is desirable to reduce fiber angle gap **135** through a design for composite structure **102.** In some illustrative examples, fiber angle gap **135** increases moving from apex **115** towards the connection between rounded end **116** and cylindrical surface **120.**

Fiber angle gap **135** can be managed by the order of layup for plurality of dome plies **108,** sizes of plurality of dome plies **108,** and quantity of rosettes **164.** Laying up plurality of dome plies **108** with shorter dome plies can reduce fiber angle gap **135.** Selection of which plies of plurality of cylindrical plies **168** to extend further on rounded end **116** of mandrel **118** also can be done to reduce fiber angle gap **135.** Selection of specific fiber angles of cylindrical portion **112** to extend further onto rounded end **116** of mandrel **118** also can be done to reduce fiber angle gap **135.** Laying up plurality of dome plies **108** using plurality of rosettes **110** with greater quantity of rosettes **164** can reduce fiber angle gap **135.** In some illustrative examples, clocking offset **166** is selected to reduce fiber angle gap **135.** In some illustrative examples, the fiber angles of plurality of dome plies **108** and desired structural conditions for composite structure **102** affect lengths **137** of plurality of dome plies **108.** In some illustrative examples, fiber angle gap **135** of dome portion **106** is desirably equal to or less than 45 degrees. In some illustrative examples, to reduce fiber angle gap **135,** quantity of rosettes **164** can be increased. In some illustrative examples, to reduce fiber angle gap **135,** some cylindrical plies of plurality of cylindrical plies **168** can extend further onto rounded end **116** of mandrel **118.**

The illustration of manufacturing environment **100** in **Figure 1** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, more than six sets of plies are present in plurality of dome plies **108.** Plurality of dome plies **108** comprises any desirable quantity of plies divided into any desired plurality of sets.

Additionally, although composite structure **102** is described as having plurality of cylindrical plies **168** and shape of half capsule **190,** composite structure **102** can have other desirable shapes. In some illustrative examples, a non-cylindrical portion can be connected to dome portion **106** by transition region **184.** In some illustrative examples, one of a conic, ellipsoidal, or other contoured portion is present instead of cylindrical portion **112.** In other words, mandrel **118** can have another shape other than cylindrical surface **120** while still having rounded end **116.** In these illustrative examples, mandrel **118** can be used to form a composite structure **102** with a body having a shape other than a cylindrical shape.

Further, for some non-cylindrical shapes, transition region **184** can be located at least partially in the body of the composite structure. In these illustrative examples, transition region **184** can be located in any desirable portion on rounded end **116** or a body of the mandrel depending on steering, angle gap, angle deviation, and other characteristics from the design of the composite structure.

Turning now to **Figure 2****,** an illustration of a isometric view of a unitary composite structure on a mandrel is depicted in accordance with an illustrative embodiment. Unitary composite structure **202** is depicted in view **200.** Unitary composite structure **202** is a physical implementation of unitary **104** composite structure **102** of **Figure 1****.**

Unitary composite structure **202** comprises dome portion **204** and cylindrical portion **206.** Dome portion **204** comprises a plurality of sets of plies laid up using a plurality of rosettes. Cylindrical portion **206** is laid up with a layup rosette independent of the plurality of rosettes.

Unitary composite structure **202** further comprises transition region **208** between dome portion **204** and cylindrical portion **206** formed by varying lengths of plurality of dome plies **216** of dome portion **204** and varying lengths of plurality of cylindrical plies **218** of cylindrical portion that transition over to the dome portion **204.** In some illustrative examples, transition region **208** comprises a double scarf joint formed by alternatingly laid sets of cylindrical plies and sets of dome plies.

In some illustrative examples, dome portion **204** comprises a quantity of fiber angles equal to a quantity of rosettes in the plurality of rosettes. In some illustrative examples, fiber angles of dome portion **204** are approximately equally offset from each other. In some illustrative examples, the plurality of rosettes comprises at least four rosettes. In some illustrative examples, a fiber angle gap of dome portion **204** is desirably equal to or less than 45 degrees.

Dome portion **204** is laid up on rounded end **212** of mandrel **210.** Cylindrical portion **206** is laid up on cylindrical surface **214** of mandrel **210.** Some cylindrical plies extend over portions of rounded end **212** of mandrel **210** to form transition region **208.**

Although unitary composite structure **202** is described as having plurality of cylindrical plies forming cylindrical portion **206,** a composite structure can be laid up according to the illustrative examples with a non-cylindrical body. In some illustrative examples, a composite structure can be one of a conic, ellipsoidal, or other contoured portion instead of cylindrical portion **206.**

Turning now to **Figure 3****,** an illustration of a front view of a dome ply of a dome portion of a composite structure is depicted in accordance with an illustrative embodiment. Dome ply **302** in view **300** is a physical implementation of one of plurality of dome plies **108** of **Figure 1****.** In some illustrative examples, dome ply **302** has a larger surface area than a ply of plurality of dome plies **108** of **Figure 1****.** The surface area of dome ply **302** can be adjusted based on a design of the composite structure and a desired fiber angle gap. In some illustrative examples, dome ply **302** is a physical implementation of a ply of first set of plies **138** of **Figure 1****.** Dome ply **302** can be present in unitary composite structure **202** of **Figure 2****.** Dome ply **302** comprises plurality of alternating paths **304** of plurality of tows **306.** Each path of plurality of alternating paths **304** comprises plurality of tows **306.** In some illustrative examples, plurality of tows **306** comprises sixteen tows. Plurality of tows **306** comprises any desirable quantity of tows.

Plurality of alternating paths **304** have been laid up using rosette **308.** Rosette **308** is a physical implementation of any desirable rosette of plurality of rosettes **110** of **Figure 1****.** In some illustrative examples, rosette **308** is a physical implementation of first rosette **126** of **Figure 1****.** In this illustrative example, rosette **308** can be referred to as a reference rosette. In some illustrative examples, rosette **308** is oriented such that a Z-axis is normal to an apex of a rounded end of a mandrel. In some illustrative examples, rosette **308** is oriented such that a Z-axis is parallel to a longitudinal axis of the cylindrical surface of the mandrel. The x-axis and y-axis of rosette **308** can have any desirable directions. In some illustrative examples, rosette **308** is oriented such that one axis is parallel to a Z-axis of a cylinder rosette (not shown). Cylinder rosette is a rosette used to layup the cylindrical portion of a unitary composite structure.

In some illustrative examples, rosette **308** is oriented such that one axis is perpendicular to the manufacturing floor and one axis is parallel to the manufacturing floor. In some illustrative examples, rosette **308** is oriented such that a Z-axis is parallel to the cylindrical surface of a mandrel.

Dome ply **302** has a zero degree angle relative to rosette **308.** Dome ply **302** has been laid up without steering plurality of tows **306.** Dome ply **302** is able to be laid up without steering plurality of tows **306** due to dome ply **302** having the zero degree angle relative to rosette **308.**

Turning now to **Figure 4****,** an illustration of a front view of a dome ply of a dome portion of a composite structure is depicted in accordance with an illustrative embodiment. Dome ply **402** in view **400** is a physical implementation of one of plurality of dome plies **108** of **Figure 1****.** In some illustrative examples, dome ply **402** has a larger surface area than a ply of plurality of dome plies **108** of **Figure 1****.** The surface area of dome ply **402** can be adjusted based on a design of the composite structure and a desired fiber angle gap. In some illustrative examples, dome ply **402** is a physical implementation of a ply of second set of plies **140** of **Figure 1****.** Dome ply **402** can be present in unitary composite structure **202** of **Figure 2****.** Dome ply **402** comprises plurality of alternating paths **404** of plurality of tows **406.** Each path of plurality of alternating paths **404** comprises plurality of tows **406.**

Plurality of alternating paths **404** have been laid up using rosette **408.** Rosette **408** is a physical implementation of any desirable rosette of plurality of rosettes **110** of **Figure 1****.** In some illustrative examples, rosette **308** is a physical implementation of second rosette **128** of **Figure 1****.** In this illustrative example, rosette **408** has been rotated about the Z-axis relative to rosette **308.** In some illustrative examples, the rotating about the Z-axis can be referred to as "clocking". In this illustrative example, rosette **408** has been clocked approximately 22.5 degrees relative to rosette **308.**

Dome ply **402** has a zero degree angle relative to rosette **408.** Dome ply **402** has been laid up without steering plurality of tows **406** due to laying up dome ply **402** with the zero degree angle relative to rosette **408.** Dome ply **402** has an effective ply angle of 22.5 degrees relative to rosette **308** without steering plurality of tows **406.** Dome ply **402** can be referred to as a 22.5 degree ply.

Turning now to **Figure 5****,** an illustration of a front view of a dome ply of a dome portion of a composite structure is depicted in accordance with an illustrative embodiment. Dome ply **502** in view **500** is a physical implementation of one of plurality of dome plies **108** of **Figure 1****.** In some illustrative examples, dome ply **502** has a larger surface area than a ply of plurality of dome plies **108** of **Figure 1****.** The surface area of dome ply **502** can be adjusted based on a design of the composite structure and a desired fiber angle gap. In some illustrative examples, dome ply **502** is a physical implementation of a ply of third set of plies **142** of **Figure 1****.** Dome ply **502** can be present in unitary composite structure **202** of **Figure 2****.** Dome ply **502** comprises plurality of alternating paths **504** of plurality of tows **506.** Each path of plurality of alternating paths **504** comprises plurality of tows **506.**

Plurality of alternating paths **504** have been laid up using rosette **508.** Rosette **508** is a physical implementation of any desirable rosette of plurality of rosettes **110** of **Figure 1****.** In some illustrative examples, rosette **508** is a physical implementation of third rosette **130** of **Figure 1****.** In this illustrative example, rosette 508 has been clocked relative to rosette **308.** In this illustrative example, rosette **508** has been clocked approximately 45 degrees relative to rosette **308.**

Dome ply **502** has a zero degree fiber angle relative to rosette **508.** Dome ply **502** has been laid up without steering plurality of tows **506.** Dome ply **502** has an effective ply angle of 45 degrees relative to rosette **308** without steering plurality of tows **506.** Dome ply **502** can be referred to as a 45 degree ply.

Turning now to **Figure 6****,** an illustration of an isometric view of composite plies laid up on a mandrel is depicted in accordance with an illustrative embodiment. In view **600** layup **601** comprises plurality of plies **602** laid up on mandrel **604.** Layup **601** comprises at least one cylindrical ply of plurality of cylindrical plies **168** of **Figure 1** and at least one dome ply of plurality of dome plies **108** of **Figure 1****.** Layup **601** can be a portion of unitary composite structure **202** of **Figure 2****.** Dome ply **302** of **Figure 3** can be one ply of layup **601.** Dome ply **402** of **Figure 4** can be one ply of layup **601.** Dome ply **502** of **Figure 5** can be one ply of layup **601.**

Plurality of plies **602** comprises dome ply **606** and cylindrical ply **608.** In this illustrative example, cylindrical ply **608** is a zero degree ply. Transition region **610** is formed by interactions between dome plies on rounded end **614** of mandrel and cylindrical plies on cylindrical surface **616** of mandrel **604.**

Dome ply **606** is laid up on rounded end **614** of mandrel **604** using rosette **612.** Rosette **612** is clocked relative to reference rosette **618.** By clocking rosette **612** relative to reference rosette **618,** dome ply **606** has an effective fiber angle of approximately 22.5 degrees. By laying up dome ply **606** at a zero fiber angle relative to rosette **612,** dome ply **606** is laid up at an effective fiber angle of 22.5 degrees without using fiber steering.

A dome portion of a unitary composite structure comprises a plurality of sets of dome plies laid up using a plurality of rosettes on rounded end **614** of mandrel **604.** Dome ply **606** is one ply of the plurality of sets of dome plies of the dome portion.

Cylindrical ply **608** is laid up with a layup rosette independent of rosette **612,** and parallel to the cylinders axis of symmetry. Cylindrical ply **608** is laid up with a layup rosette independent of the plurality of rosettes for laying up a dome portion on rounded end **614** of mandrel **604.** As depicted in view **600,** cylindrical ply **608** is laid up over the edges of dome ply **606.**

In some illustrative examples, after laying up cylindrical ply **608,** another cylindrical ply can be laid up over at least a portion of cylindrical ply **608.** The another cylindrical ply can have any desirable fiber angle according to a design for the unitary composite structure. The another cylindrical ply will be laid up using a same layup rosette as cylindrical ply **608.**

In some illustrative examples, after laying up cylindrical ply **608,** another dome ply can be laid up over at least a portion of cylindrical ply **608.** In some illustrative examples, after laying up cylindrical ply **608,** another dome ply can be laid up abutting or with a slight gap with cylindrical ply **608.** The another dome ply can have any desirable fiber angle according to a design for the unitary composite structure. In some illustrative examples, the another dome ply can be laid up using rosette **612.** In some illustrative examples, the another dome ply can be laid up using a rosette different from rosette.

A transition region can be formed between the dome portion and the cylindrical portion formed by varying lengths of plurality of dome plies of the dome portion and varying lengths of plurality of cylindrical plies of the cylindrical portion. In some illustrative examples, a next cylindrical ply laid up over a portion of cylindrical ply **608** is shorter than cylindrical ply **608** to cover less of rounded end **614** of mandrel **604.**

In some illustrative examples, the transition region comprises a double scarf joint formed by alternatingly laid sets of cylindrical plies on cylindrical surface and sets of dome plies. The transition region can include any desirable quantity of joints. In some illustrative examples, the transition region comprises a number of joints staggered through the thickness of the unitary composite structure.

Turning now to **Figure 7****,** an illustration of an isometric view of composite plies laid up on a mandrel is depicted in accordance with an illustrative embodiment. In view **700** layup **701** comprises plurality of plies **702** laid up on mandrel **704.** Layup **701** comprises at least one cylindrical ply of plurality of cylindrical plies **168** of **Figure 1** and at least one dome ply of plurality of dome plies **108** of **Figure 1****.** Layup **701** can be a portion of unitary composite structure **202** of **Figure 2****.** Dome ply **302** of **Figure 3** can be one ply of layup **701.** Dome ply **402** of **Figure 4** can be one ply of layup **701.** Dome ply **502** of **Figure 5** can be one ply of layup **701.**

Plurality of plies **702** comprises dome ply **706** and cylindrical ply **708.** In this illustrative example, cylindrical ply **708** is a ninety degree ply. Transition region **710** is formed by interactions between dome plies on rounded end **714** of mandrel and cylindrical plies on cylindrical surface **716** of mandrel **704.**

Dome ply **706** is laid up on rounded end **714** of mandrel **704** using rosette **712.** Rosette **712** is clocked relative to reference rosette **718.** By clocking rosette **712** relative to reference rosette **718,** dome ply **706** has an effective fiber angle of approximately 90 degrees. By laying up dome ply **706** at a zero fiber angle relative to rosette **712,** dome ply **706** is laid up at an effective fiber angle of 90 degrees without using fiber steering.

A dome portion of a unitary composite structure comprises a plurality of sets of dome plies laid up using a plurality of rosettes on rounded end **714** of mandrel **704.** Dome ply **706** is one ply of the plurality of sets of dome plies of the dome portion.

Cylindrical ply **708** is laid up with a layup rosette independent of rosette **712.** Cylindrical ply **708** is laid up with a layup rosette independent of the plurality of rosettes for laying up a dome portion on rounded end **714** of mandrel **704.** As depicted in view **700,** cylindrical ply **708** is laid up over the edges of dome ply **706.**

In some illustrative examples, after laying up cylindrical ply **708,** another cylindrical ply can be laid up over at least a portion of cylindrical ply **708.** The another cylindrical ply can have any desirable fiber angle according to a design for the unitary composite structure. The another cylindrical ply will be laid up using a same layup rosette as cylindrical ply **708.**

In some illustrative examples, after laying up cylindrical ply **708,** another dome ply can be laid up over at least a portion of cylindrical ply **708.** In some illustrative examples, after laying up cylindrical ply **708,** another dome ply can be laid up abutting or with a slight gap with cylindrical ply **708.** The another dome ply can have any desirable fiber angle according to a design for the unitary composite structure. In some illustrative examples, the another dome ply can be laid up using rosette **712.** In some illustrative examples, the another dome ply can be laid up using a rosette different from rosette.

A transition region can be formed between the dome portion and the cylindrical portion formed by varying lengths of plurality of dome plies of the dome portion and varying lengths of plurality of cylindrical plies of the cylindrical portion. In some illustrative examples, a next cylindrical ply laid up over a portion of cylindrical ply **708** is shorter than cylindrical ply **708** to cover less of rounded end **714** of mandrel **704.**

In some illustrative examples, the transition region comprises a double scarf joint formed by alternatingly laid sets of cylindrical plies on cylindrical surface and sets of dome plies. The transition region can include any desirable quantity of joints. In some illustrative examples, the transition region comprises a number of joints staggered through the thickness of the unitary composite structure.

Although in **Figures 6** and **7** the unitary composite structure is described as having plurality of cylindrical plies forming a cylindrical portion, a composite structure can be laid up according to the illustrative examples with a non-cylindrical body. In some illustrative examples, a composite structure can be one of a conic, ellipsoidal, or other contoured portion instead of a cylindrical portion.

Turning now to **Figure 8****,** a flowchart of a method of laying up a unitary composite structure is depicted in accordance with an illustrative embodiment. Method **800** can be performed to layup unitary **104** composite structure **102** of **Figure 1****.** Method **800** can be performed to layup unitary composite structure **202** of **Figure 2****.** Laying up dome ply **302** of **Figure 3** can be done during method **800.** Laying up dome ply **402** of **Figure 4** can be done during method **800.** Laying up dome ply **502** of **Figure 5** can be done during method **800.** Method **800** can be performed to form layup **601** of **Figure 6****.** Method **800** can be performed to form layup **701** of **Figure 7****.**

Method **800** lays up a plurality of dome plies on a rounded end of a mandrel using a plurality of rosettes (operation **802).** Method **800** lays up a plurality of cylindrical plies on a cylindrical surface of the mandrel using a layup rosette independent of the plurality of rosettes (operation **804).** Method **800** forms a transition region comprising a joint between the plurality of dome plies and the plurality of cylindrical plies by varying lengths of the plurality of dome plies and the plurality of cylindrical plies (operation **805).** Afterwards, method **800** terminates.

In some illustrative examples, laying up the plurality of dome plies comprises laying up a plurality of sets of plies, wherein each set of plies of the plurality of sets of plies is laid up at a zero degree fiber angle according to a respective rosette of the plurality of rosettes (operation **806).** By laying up each ply at a zero degree fiber angle relative to a respective rosette, each ply can be laid up with a desired effective fiber angle without undesirable amounts of fiber steering. Each set of plies comprises any desirable quantity of plies.

In some illustrative examples, laying up each dome ply of the plurality of dome plies comprises laying up a plurality of alternating paths, wherein each path of the plurality of alternating paths comprises a plurality of tows (operation **808).** The plurality of tows comprises any desirable quantity of tows.

In some illustrative examples, forming the transition region comprises forming the joint entirely on the rounded end of the mandrel (operation **810).** The lengths of the plurality of dome plies and the plurality of cylindrical plies can be varied by any desirable amount. In some illustrative examples, the lengths of the plurality of dome plies can be varied by approximately 12,7 mm (0.5 inches).

In some illustrative examples, wherein forming the transition region comprises alternatingly laying up the plurality of dome plies and the plurality of cylindrical plies to form the joint (operation **812).** Any desirable quantity of dome plies can be laid up prior to laying up cylindrical plies. Additionally, the quantity of dome plies laid up prior to laying up of a subsequent quantity of cylindrical plies is independent of other quantities of dome plies previously laid down.

In some illustrative examples, the plurality of rosettes comprises at least four rosettes (operation **814).** In some illustrative examples, the plurality of rosettes comprises six rosettes. In some illustrative examples, the plurality of rosettes comprises more than six rosettes.

In some illustrative examples, method **800** cures the plurality of dome plies and the plurality of cylindrical plies on the mandrel (operation **816).** The plurality of dome plies and the plurality of cylindrical plies are co-cured on the mandrel. By co-curing the plurality of dome plies and the plurality of cylindrical plies on the mandrel, a unitary composite structure with a dome portion, a cylindrical portion, and a transition region between the dome portion and the cylindrical portion is formed. By co-curing the plurality of dome plies and the plurality of plies on the mandrel, a unitary composite structure with a half capsule shape is formed.

In some illustrative examples, laying up the plurality of cylindrical plies comprises rotating the mandrel during layup of the plurality of cylindrical plies (operation **818).** In some illustrative examples, rotating the mandrel allows a composite lay-up head to remain on a track.

In some illustrative examples, method **800** divides one hundred and eighty degrees into equal increments to set a clocking offset for the plurality of rosettes (operation **820).** In some illustrative examples, each rosette is approximately equally offset from neighboring rosettes.

Turning now to **Figure 9****,** a flowchart of a method of laying up a composite structure is depicted in accordance with an illustrative embodiment. Method **900** can be performed to layup unitary **104** composite structure **102** of **Figure 1****.** Method **900** can be performed to layup unitary composite structure **202** of **Figure 2****.** Laying up dome ply **302** of **Figure 3** can be done during method **900.** Laying up dome ply **402 of** **Figure 4** can be done during method **900.** Laying up dome ply **502** of **Figure 5** can be done during method **900.** Method **900** can be performed to form layup **601** of **Figure 6****.** Method **900** can be performed to form layup **701** of **Figure 7****.**

Method **900** lays up a plurality of dome plies on a rounded end of a mandrel (operation **902).** In method **900,** laying up the plurality of dome plies comprises laying up a first set of plies on a rounded end of a mandrel at a zero degree fiber angle using a first rosette (operation **906).** In method **900,** laying up the plurality of dome plies comprises laying up a second set of plies on the rounded end of the mandrel at a zero degree fiber angle using a second rosette offset from the first rosette (operation **908).** In method **900,** laying up the plurality of dome plies comprises laying up a third set of plies on the rounded end of the mandrel at a zero degree fiber angle using a third rosette offset from both the first rosette and the second rosette (operation **910).**

Method **900** lays up a plurality of cylindrical plies on a cylindrical surface of the mandrel in contact with the plurality of dome plies (operation **904).** Method **900** varies lengths of the plurality of dome plies and the plurality of cylindrical plies to form a joint between the plurality of dome plies and the plurality of cylindrical plies (operation **912).** By varying the lengths of the plurality of dome plies and the plurality of cylindrical plies, any desirable type of joint can be formed. Afterwards, method **900** terminates.

In some illustrative examples, the joint is formed entirely on the rounded end of the mandrel (operation **913).**

In some illustrative examples, laying up the plurality of cylindrical plies comprises alternatingly laying down sets of cylindrical plies and sets of dome plies to form a joint between the plurality of dome plies and the plurality of cylindrical plies (operation **914).** The sets of cylindrical plies and the sets of dome plies are laid up in concert such that the joint is formed.

In some illustrative examples, laying up each dome ply of the plurality of dome plies comprises laying up a plurality of alternating paths, wherein each path of the plurality of alternating paths comprises a plurality of tows (operation **916).** Each of the plurality of alternating paths comprises the same plurality of tows. In some illustrative examples, the plurality of tows comprises at least 16 tows.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **806** through operation **820** may be optional. As another example, operation **906** through operation **916** may be optional.

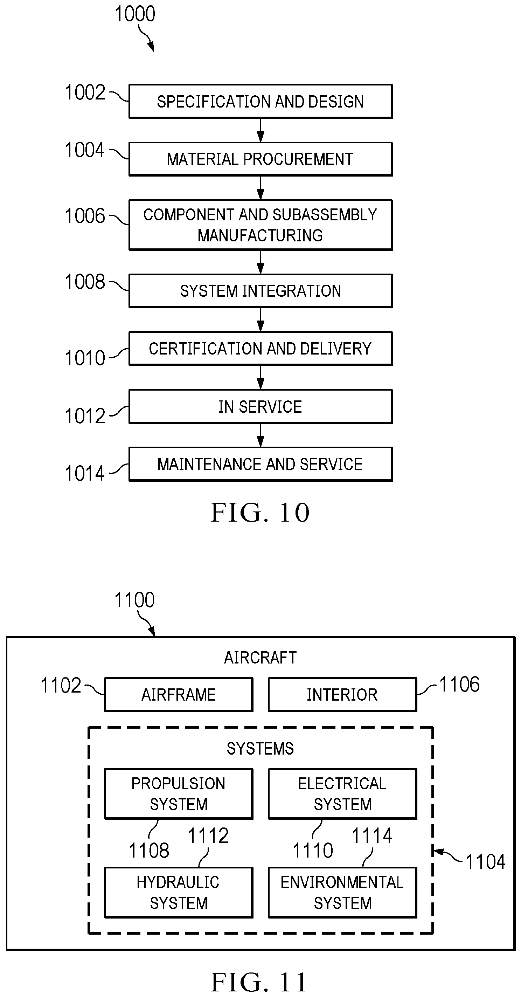

Illustrative embodiments of the present disclosure may be described in the context of aircraft manufacturing and service method **1000** as shown in **Figure 10** and aircraft **1100** as shown in **Figure 11****.** Turning first to **Figure 10****,** an illustration of an aircraft manufacturing and service method in a form of a block diagram is depicted in accordance with an illustrative embodiment. During pre-production, aircraft manufacturing and service method **1000** may include specification and design **1002** of aircraft **1100** in **Figure 11** and material procurement **1004.**

During production, component and subassembly manufacturing **1006** and system integration **1008** of aircraft **1100** takes place. Thereafter, aircraft **1100** may go through certification and delivery **1010** in order to be placed in service **1012.** While in service **1012** by a customer, aircraft **1100** is scheduled for routine maintenance and service **1014,** which may include modification, reconfiguration, refurbishment, or other maintenance and service.

Each of the processes of aircraft manufacturing and service method **1000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 11****,** an illustration of an aircraft in a form of a block diagram is depicted in which an illustrative embodiment may be implemented. In this example, aircraft **1100** is produced by aircraft manufacturing and service method **1000** of **Figure 10** and may include airframe **1102** with plurality of systems **1104** and interior **1106.** Examples of systems **1104** include one or more of propulsion system **1108,** electrical system **1110,** hydraulic system **1112,** and environmental system **1114.** Any number of other systems may be included.

Apparatuses and methods embodied herein may be employed during at least one of the stages of aircraft manufacturing and service method **1000.** One or more illustrative embodiments may be manufactured or used during at least one of component and subassembly manufacturing **1006,** system integration **1008,** in service **1012,** or maintenance and service **1014** of **Figure 10****.**

The illustrative examples provide methods of fiber placing an integral dome/cylinder structure using a hybrid rosette. In some illustrative examples, a method cantilevers the dome/cylinder tool. The illustrative examples fiber place the dome cover plies with a 0 degree rosette perpendicular to the axis of symmetry. Each of the multiple rosettes are rotated about the surface normal at the apex of the dome (the axis of symmetry, or the Z axis of the reference rosette). The illustrative examples fiber place the cylinder plies with a 0 degree rosette parallel to the axis of symmetry. The illustrative examples stagger the interfaces of the plies across the dome to blend the effects. The illustrative examples co-cure the dome/cylinder structure.

In the illustrative examples, the dome plies have separate rosette references. In the illustrative examples, the dome plies are 'clocked' a desired amount. In some non-limiting illustrative examples, the dome plies are 'clocked' 22.5 deg increments (0, 22.5, 45, 67.5, 90, 112.5, 135, 157.5) in order to maintain a desirable 'angle gap' through thickness. In some illustrative examples, maintaining a desirable angle gap comprises minimizing the variation. The angle gap is a largest angle between adjacent fiber directions through the thickness. In some illustrative examples, ply interfaces are separated by 0.5". In other illustrative examples, ply interfaces can be separated by greater than or less than 0.5".

In some illustrative examples, next sequential interfaces are positioned in between the previous in order to distribute the interfaces through thickness. Any desirable quantity of effective fiber angles can be present in the dome portion. In some illustrative examples, the dome portion includes 4 orientations. In some illustrative examples, the dome portion includes 6 orientations. In some illustrative examples, the dome portion includes at least 8 orientations (i.e., 22.5 degree increments) to reduce angle gaps. More angles will give you more uniform properties.

The illustrative examples present a cylinder and dome fiber placed as one piece with 2 separate layup techniques. The illustrative examples utilize a cantilevered tool on rotator. The illustrative examples include a dome and cylinder laid up at the same time. In some illustrative examples, a cylinder is laid up first. The head of an automated placement system is rotated for the dome. The cylinder and dome have separate rosette references. Dome plies are 'clocked' at approximately equal increments. In some illustrative examples, the increments can be 0, 22.5, 45, 67.5, 90, 112.5, 135, 157.5. In some illustrative examples, the increments are selected in order to maintain minimal 'angle gap' through thickness. Angle gap equals the difference in fiber angle of two adjacent fiber directions through the thickness.
There is disclosed a method of laying up a unitary composite structure, comprising:
laying up a plurality of dome plies on a rounded end of a mandrel using a plurality of rosettes;
laying up a plurality of cylindrical plies on a cylindrical surface of the mandrel using a layup rosette independent of the plurality of rosettes; and
forming a transition region comprising a joint between the plurality of dome plies and the plurality of cylindrical plies by varying lengths of the plurality of dome plies and lengths of the plurality of cylindrical plies, wherein forming the transition region comprises forming the joint entirely on the rounded end of the mandrel.

Preferably, laying up the plurality of dome plies comprises laying up a plurality of sets of plies, wherein each set of plies of the plurality of sets of plies is laid up at a zero degree fiber angle according to a respective rosette of the plurality of rosettes. Preferably laying up each dome ply of the plurality of dome plies comprises laying up a plurality of alternating paths, wherein each path of the plurality of alternating paths comprises a plurality of tows.

Preferably, forming the transition region comprises alternatingly laying up the plurality of dome plies and the plurality of cylindrical plies to form the joint. Preferably, the plurality of rosettes comprises at least four rosettes.

Preferably, the method further comprising:
curing the plurality of dome plies and the plurality of cylindrical plies on the mandrel.

Preferably, the method further comprising:
dividing one hundred and eighty into equal increments to set a clocking offset for the plurality of rosettes.

Preferably, laying up the plurality of cylindrical plies comprises rotating the mandrel during layup of the plurality of cylindrical plies.

There is further disclosed a unitary composite structure comprising:
a dome portion comprising a plurality of sets of plies laid up using a plurality of rosettes;
a cylindrical portion laid up with a layup rosette independent of the plurality of rosettes; and
a transition region comprising a joint between the dome portion and the cylindrical portion formed by varying lengths of plurality of dome plies of the dome portion and varying lengths of plurality of cylindrical plies of the cylindrical portion, wherein the joint is formed entirely on the rounded end of a mandrel.

Preferably, the unitary composite structure has a half capsule shape comprising a cap and a body joined by a junction;
wherein the cap comprises the dome portion, the transition region, and an edge of the cylindrical portion; and
wherein the body is formed by the cylindrical portion.

Preferably, the transition region comprises a double scarf joint formed by alternatingly laid sets of cylindrical plies and sets of dome plies.

Preferably, the dome portion comprises a quantity of fiber angles equal to a quantity of rosettes in the plurality of rosettes.

Preferably, fiber angles of the dome portion are approximately equally offset from each other.

Preferably, the plurality of rosettes comprises at least four rosettes.

Preferably, a fiber angle gap of the dome portion is less than 45 degrees.

There is further disclosed a method, not being part of the claimed invention, of laying up a composite structure comprising:
laying up a plurality of dome plies on a rounded end of a mandrel, laying up the plurality of dome plies comprising:
   laying up a first set of plies on a rounded end of a mandrel at a zero degree fiber angle using a first rosette;
   laying up a second set of plies on the rounded end of the mandrel at a zero degree fiber angle using a second rosette offset from the first rosette; and
   laying up a third set of plies on the rounded end of the mandrel at a zero degree fiber angle using a third rosette offset from both the first rosette and the second rosette;
laying up a plurality of cylindrical plies on a cylindrical surface of the mandrel in contact with the plurality of dome plies; and
varying lengths of the plurality of dome plies and the plurality of cylindrical plies to form a joint between the plurality of dome plies and the plurality of cylindrical plies.

Preferably, the joint is formed entirely on the rounded end of the mandrel.

Preferably, laying up the plurality of cylindrical plies comprises alternatingly laying down sets of cylindrical plies and sets of dome plies to form a joint between the plurality of dome plies and the plurality of cylindrical plies.

Preferably, laying up each dome ply of the plurality of dome plies comprises laying up a plurality of alternating paths, wherein each path of the plurality of alternating paths comprises a plurality of tows.

## Claims

1. A method (800) of laying up a unitary (104) composite structure (102, 202), comprising:
laying up (802) a plurality of dome plies (108, 216) on a rounded end (116, 212) of a mandrel (118, 210) using a plurality of rosettes (110, 308, 408, 508);
laying up (804) a plurality of cylindrical plies (168, 218) on a cylindrical surface (120, 214) of the mandrel (118, 210) using a layup rosette (114) independent of the plurality of rosettes (110, 308, 408, 508); and
forming (805) a transition region (184, 208) comprising a joint (186) between the plurality of dome plies (108, 216) and the plurality of cylindrical plies (168, 218) by varying lengths (137) of the plurality of dome plies (108, 216) and lengths (182) of the plurality of cylindrical plies (168, 218),
wherein forming (810) the transition region (184, 208) comprises forming the joint (186) entirely on the rounded end (116, 212) of the mandrel (118, 210).

2. The method (800) of claim 1, wherein (806) laying up the plurality of dome plies (108, 216) comprises laying up a plurality of sets of plies (109), wherein each set of plies (138, 140, 142, 144, 146, 148) of the plurality of sets of plies (109) is laid up at a zero degree fiber angle (ref#) according to a respective rosette (126, 128, 130, 132, 134, 136) of the plurality of rosettes (110, 308, 408, 508).

3. The method (800) of claim 1 or 2, wherein (808) laying up each dome ply (108, 216) of the plurality of dome plies (108, 216) comprises laying up a plurality of alternating paths (123, 304, 404, 504), wherein each path of the plurality of alternating paths (123, 304, 404, 504) comprises a plurality of tows (122, 306, 406, 506).

4. The method (800) of any of claims 1 to 3, wherein (812) forming the transition region (184, 208) comprises alternatingly laying up the plurality of dome plies (108, 216) and the plurality of cylindrical plies (168, 218) to form the joint (186).

5. The method (800) of any of claims 1 to 4, wherein (814) the plurality of rosettes (110, 308, 408, 508) comprises at least four rosettes (164, 126, 128, 130, 132).

6. The method (800) of any of claims 1 to 5 further comprising:
curing (816) the plurality of dome plies (108, 216) and the plurality of cylindrical plies (168, 218) on the mandrel (118, 210).

7. The method (800) of any of claims 1 to 6 further comprising:
dividing (820) one hundred and eighty into equal increments (ref#) to set a clocking offset (166) for the plurality of rosettes (110, 308, 408, 508).

8. The method (800) of any of claims 1 to 7, wherein (818) laying up the plurality of cylindrical plies (168, 218) comprises rotating the mandrel (118, 210) during layup of the plurality of cylindrical plies (168, 218).

9. A unitary (104) composite structure (102, 202) comprising:
a dome portion (106, 204) comprising a plurality of sets of plies (109) laid up using a plurality of rosettes (110, 308, 408, 508);
a cylindrical portion (112, 206) laid up with a layup rosette (114) independent of the plurality of rosettes (110, 308, 408, 508); and
a transition region (184, 208) comprising a joint (186) between the dome portion (106, 204) and the cylindrical portion (112, 206) formed by varying lengths (137) of plurality of dome plies (108, 216) of the dome portion (106, 204) and varying lengths (182) of plurality of cylindrical plies (168, 218) of the cylindrical portion (112, 206),
wherein the joint (186) is formed entirely on the rounded end (116, 212) of a mandrel (118, 210).

10. The unitary (104) composite structure (102, 202) of claim 9, wherein the unitary (104) composite structure (102, 202) has a half capsule shape comprising a cap (191) and a body (195) joined by a junction (193);
wherein the cap (191) comprises the dome portion (106, 204), the transition region (184, 208), and an edge of the cylindrical portion (112, 206); and
wherein the body (195) is formed by the cylindrical portion (112, 206).

11. The unitary (104) composite structure (102, 202) of claim 9 or 10, wherein the transition region (184, 208) comprises a double scarf joint formed by alternatingly laid sets of cylindrical plies (170, 172, 174, 176, 178, 180) and sets of dome plies (138, 140, 142, 144, 146, 148).

12. The unitary (104) composite structure (102, 202) of any of claims 9 to 11, wherein
the dome portion (106, 204) comprises a quantity of fiber angles (150, 152, 154, 156, 158, 160) equal to a quantity of rosettes (164) in the plurality of rosettes (110, 308, 408, 508).

13. The unitary (104) composite structure (102, 202) of any of claims 9 to 12, wherein
fiber angles (150, 152, 154, 156, 158, 160) of the dome portion (106, 204) are approximately equally offset from each other.

14. The unitary (104) composite structure (102, 202) of any of claims 9 to 13, wherein the plurality of rosettes (110, 308, 408, 508) comprises at least four rosettes.

15. The unitary (104) composite structure (102, 202) of any of claims 9 to 14, wherein a fiber angle gap (135) of the dome portion (106, 204) is less than 45 degrees.

## Patentansprüche

1. Verfahren (800) zum Auflegen einer einheitlichen (104) Verbundstruktur (102, 202), die aufweist:
Auflegen (802) einer Vielzahl von Kuppellagen (108, 216) auf ein rundes Ende (116, 212) eines Dorns (118, 210) unter Verwendung einer Vielzahl von Rosetten (110, 308, 408, 508);
Auflegen (804) einer Vielzahl von zylindrischen Lagen (168, 218) auf eine zylindrische Oberfläche (120, 214) des Dorns (118, 210) unter Verwendung einer Auflege-Rosette (114) unabhängig von der Vielzahl von Rosetten (110, 308, 408, 508); und
Ausbilden (805) eines Übergangsbereichs (184, 208), der eine Verbindung (186) zwischen der Vielzahl von Kuppellagen (108, 216) und der Vielzahl von zylindrischen Lagen (168, 218) aufweist, durch Variieren der Längen (137) von der Vielzahl von Kuppellagen (108, 216) und der Längen (182) der Vielzahl von zylindrischen Lagen (168, 218),
wobei ein Ausbilden (810) des Übergangsbereichs (184, 208) ein Ausbilden der Verbindung (186) gänzlich auf dem abgerundeten Ende (116, 212) des Dorns (118, 210) aufweist.

2. Verfahren (800) nach Anspruch 1, wobei (806) das Auflegen der Vielzahl von Kuppellagen (108, 216) ein Auflegen einer Vielzahl von Sätzen von Lagen (109) aufweist, wobei jeder Satz von Lagen (138, 140, 142, 144, 146, 148) der Vielzahl von Sätzen von Lagen (109) bei einem Faserwinkel (ref#) von null Grad gemäß einer jeweiligen Rosette (126, 128, 130, 132, 134, 136) der Vielzahl von Rosetten (110, 308, 408, 508) aufgelegt wird.

3. Verfahren (800) nach Anspruch 1 oder 2, wobei (808) jede Kuppellage (108, 216) der Vielzahl von Kuppellagen (108, 216) ein Auflegen einer Vielzahl von alternativen Wegen (123, 304, 404, 504) aufweist, wobei jeder Weg der Vielzahl von alternativen Wegen (123, 304, 404, 504) eine Vielzahl von Strängen (122, 306, 406, 506) aufweist.

4. Verfahren (800) nach einem der Ansprüche 1 bis 3, wobei (812) das Ausbilden des Übergangsbereichs (184, 208) ein alternierendes Auflegen der Vielzahl von Kuppellagen (108, 216) und der Vielzahl von zylindrischen Lagen (168, 218) aufweist, um die Verbindung (186) zu formen, vorweist.

5. Verfahren (800) nach einem der Ansprüche 1 bis 4, wobei (814) die Vielzahl von Rosetten (110, 308, 408, 508) mindestens vier Rosetten (164, 126, 128, 130, 132) vorweist.

6. Verfahren (800) nach einem der Ansprüche 1 bis 5, das ferner aufweist:
Aushärten (816) der Vielzahl von Kuppellagen (108, 216) und der Vielzahl von zylindrischen Lagen (168, 218) auf dem Dorn (118, 210).

7. Verfahren (800) nach einem der Ansprüche 1 bis 6, das ferner vorweist:
Teilen (820) von einhundertachtzig Inkrementen in gleich große Inkremente (ref#), um einen Taktversatz (166) für die Vielzahl von Rosetten (110, 308, 408, 508) einzustellen.

8. Verfahren (800) nach einem der Ansprüche 1 bis 7, wobei (818) das Auflegen der Vielzahl von zylindrischen Lagen (168, 218) ein Rotieren des Dorns (118, 210) während eines Auflegens der Vielzahl von zylindrischen Lagen (168, 218) aufweist.

9. Einheitliche (104) Verbundstruktur (102, 202), das aufweist:
einen Kuppelabschnitt (106, 204), der eine Vielzahl von Sätzen von Lagen (109) aufweist, die aufgelegt sind, unter Verwendung einer Vielzahl von Rosetten (110, 308, 408, 508);
ein zylindrischer Abschnitt (112, 206), der mit einer Auflege-Rosette (114) unabhängig von der Vielzahl von Rosetten (110, 208, 408, 508) aufgelegt ist; und
einen Übergangsbereich (184, 208), der eine Verbindung (186) zwischen dem Kuppelabschnitt (106, 204) und dem zylindrischen Abschnitt (112, 206) aufweist, die durch Variieren von Längen (137) einer Vielzahl von Kuppellagen (108, 216) des Kuppelabschnitts (106, 204) und durch Variieren von Längen (182) einer Vielzahl von zylindrischen Lagen (168, 218) des zylindrischen Abschnitts (112, 206) ausgebildet sind,
wobei die Verbindung (186) gänzlich auf dem abgerundeten Ende (116, 212) eines Dorns (118, 210) ausgebildet ist.

10. Einheitliche (104) Verbundstruktur (102, 202) nach Anspruch 9, wobei die einheitliche (104) Verbundstruktur (102, 202) eine halbkapselförmige Form aufweist, die eine Kappe (191) und einen Körper (195) aufweist, die durch eine Verbindung (193) verbunden sind;
wobei die Kappe (191) den Kuppelabschnitt (106, 204), den Übergangsbereich (184, 208) und einen Rand des zylindrischen Abschnitts (112, 206) aufweist; und wobei der Körper (195) durch zylindrischen Anteil (112, 206) gebildet ist.

11. Einheitliche (104) Verbundstruktur (102, 202) nach Anspruch 9 oder 10, wobei der Übergangsbereich (184, 208) eine doppelte Schrägverbindung aufweist, die durch alternierend aufgelegte Sätze von zylindrischen Lagen (170, 172, 174, 176, 178, 180) und Sätze von Kuppellagen (138, 140, 142, 144, 146, 148) gebildet ist.

12. Einheitliche (104) Verbundstruktur (102, 202) nach einem der Ansprüche 9 bis 11, wobei
der Kuppelabschnitt (106, 204) eine Menge von Faserwinkeln (150, 152, 154, 156, 158, 160) aufweist, die gleich einer Menge von Rosetten (164) in der Vielzahl der Rosetten (110, 308, 408, 508) ist.

13. Einheitliche (104) Verbundstruktur (102, 202) nach einem der Ansprüche 9 bis 12, wobei
Faserwinkel (150, 152, 154, 156, 158, 160) des Kuppelabschnitts (106, 204) ungefähr gleich voneinander entfernt sind.

14. Einheitliche (104) Verbundstruktur (102, 202) nach einem der Ansprüche 9 bis 13, wobei die Vielzahl von Rosetten (110, 308, 408, 508) mindestens vier Rosetten aufweist.

15. Einheitliche (104) Verbundstruktur (102, 202) nach einem der Ansprüche 9 bis 14, wobei ein Faserwinkelspalt (135) des Kuppelabschnitts (106, 204) kleiner als 45 Grad ist.

## Revendications

1. Procédé (800) de disposition d'une structure composite (102, 202) unitaire (104), comprenant :
la disposition (802) d'une pluralité de plis de dôme (108, 216) sur une extrémité arrondie (116, 212) d'un mandrin (118, 210) à l'aide d'une pluralité de rosettes (110, 308, 408, 508) ;
la disposition (804) d'une pluralité de plis cylindriques (168, 218) sur une surface cylindrique (120, 214) du mandrin (118, 210) à l'aide d'une rosette de disposition (114) indépendante de la pluralité de rosettes (110, 308, 408, 508) ; et
la formation (805) d'une région de transition (184, 208) comprenant un joint (186) entre la pluralité de plis de dôme (108, 216) et la pluralité de plis cylindriques (168, 218) en faisant varier des longueurs (137) de la pluralité de plis de dôme (108, 216) et des longueurs (182) de la pluralité de plis cylindriques (168, 218),
dans lequel la formation (810) de la région de transition (184, 208) comprend la formation du joint (186) entièrement sur l'extrémité arrondie (116, 212) du mandrin (118, 210).

2. Procédé (800) selon la revendication 1, dans lequel (806) la disposition de la pluralité de plis de dôme (108, 216) comprend la disposition d'une pluralité d'ensembles de plis (109), dans lequel chaque ensemble de plis (138, 140, 142, 144, 146, 148) de la pluralité d'ensembles de plis (109) est disposé à un angle de fibre de zéro degré (ref#) selon une rosette (126, 128, 130, 132, 134, 136) respective de la pluralité de rosettes (110, 308, 408, 508).

3. Procédé (800) selon la revendication 1 ou 2, dans lequel (808) la disposition de chaque pli de dôme (108, 216) de la pluralité de plis de dôme (108, 216) comprend la disposition d'une pluralité de chemins alternés (123, 304, 404, 504), dans lequel chaque chemin de la pluralité de chemins alternés (123, 304, 404, 504) comprend une pluralité de câbles (122, 306, 406, 506).

4. Procédé (800) selon l'une quelconque des revendications 1 à 3, dans lequel (812) la formation de la région de transition (184, 208) comprend la disposition alternée de la pluralité de plis de dôme (108, 216) et de la pluralité de plis cylindriques (168, 218) pour former le joint (186).

5. Procédé (800) selon l'une quelconque des revendications 1 à 4, dans lequel (814) la pluralité de rosettes (110, 308, 408, 508) comprend au moins quatre rosettes (164, 126, 128, 130, 132).

6. Procédé (800) selon l'une quelconque des revendications 1 à 5, comprenant en outre :
le durcissement (816) de la pluralité de plis de dôme (108, 216) et de la pluralité de plis cylindriques (168, 218) sur le mandrin (118, 210).

7. Procédé (800) selon l'une quelconque des revendications 1 à 6, comprenant en outre :
la division (820) de cent quatre-vingts en incréments égaux (ref#) pour régler un décalage de positionnement horaire (166) pour la pluralité de rosettes (110, 308, 408, 508).

8. Procédé (800) selon l'une quelconque des revendications 1 à 7, dans lequel (818) la disposition de la pluralité de plis cylindriques (168, 218) comprend la rotation du mandrin (118, 210) pendant la disposition de la pluralité de plis cylindriques (168, 218).

9. Structure composite (102, 202) unitaire (104) comprenant :
une partie dôme (106, 204) comprenant une pluralité d'ensembles de plis (109) disposés à l'aide d'une pluralité de rosettes (110, 308, 408, 508) ;
une partie cylindrique (112, 206) disposée avec une rosette de disposition (114) indépendante de la pluralité de rosettes (110, 308, 408, 508) ; et
une région de transition (184, 208) comprenant un joint (186) entre la partie dôme (106, 204) et la partie cylindrique (112, 206) formé en faisant varier des longueurs (137) de pluralité de plis de dôme (108, 216) de la partie dôme (106, 204) et en faisant varier des longueurs (182) de pluralité de plis cylindriques (168, 218) de la partie cylindrique (112, 206),
dans laquelle le joint (186) est formé entièrement sur l'extrémité arrondie (116, 212) d'un mandrin (118, 210).

10. Structure composite (102, 202) unitaire (104) selon la revendication 9, dans laquelle la structure composite (102, 202) unitaire (104) a une forme de demi-capsule comprenant un capuchon (191) et un corps (195) joint par une jonction (193) ;
dans laquelle le capuchon (191) comprend la partie dôme (106, 204), la région de transition (184, 208), et un bord de la partie cylindrique (112, 206) ; et
dans laquelle le corps (195) est formé par la partie cylindrique (112, 206).

11. Structure composite (102, 202) unitaire (104) selon la revendication 9 ou 10, dans laquelle la région de transition (184, 208) comprend un joint en double chevauchement formé par des ensembles de plis cylindriques (170, 172, 174, 176, 178, 180) et des ensembles de plis de dôme (138, 140, 142, 144, 146, 148) disposés en alternance.

12. Structure composite (102, 202) unitaire (104) selon l'une quelconque des revendications 9 à 11, dans laquelle
la partie dôme (106, 204) comprend une quantité d'angles de fibre (150, 152, 154, 156, 158, 160) égale à une quantité de rosettes (164) dans la pluralité de rosettes (110, 308, 408, 508).

13. Structure composite (102, 202) unitaire (104) selon l'une quelconque des revendications 9 à 12, dans laquelle
les angles de fibre (150, 152, 154, 156, 158, 160) de la partie dôme (106, 204) sont décalés de manière approximativement égale les uns des autres.

14. Structure composite (102, 202) unitaire (104) selon l'une quelconque des revendications 9 à 13, dans laquelle la pluralité de rosettes (110, 308, 408, 508) comprend au moins quatre rosettes.

15. Structure composite (102, 202) unitaire (104) selon l'une quelconque des revendications 9 à 14, dans laquelle un espacement d'angle de fibre (135) de la partie dôme (106, 204) est inférieur à 45 degrés.
